# EUROPEAN PATENT SPECIFICATION

(11) **EP 2 515 122 B1**
(45) Date of publication and mention of the grant of the patent: **28.11.2018**
(21) Application number: 11162814.5
(22) Date of filing: 18.04.2011
(51) Int. Cl.: G01P 13/02, F03D 17/00

(54) **Method for measuring the wind direction in the wake of a wind turbine rotor**
Verfahren zur Messung der Windrichtung in der Wirbelzone eines Windturbinenrotors
Procédé de mesure du sens du vent dans le sillage arrière d'un rotor d'éolienne

(43) Date of publication of application: 24.10.2012
(73) Proprietor: Siemens Aktiengesellschaft, 80333 München (DE)
(72) Inventor: Lind, Soeren Oemann, 4700 Næstved (DK)

(56) References cited:
- EP-A2- 2 067 989
- JP-A- 1 284 763
- US-A- 4 011 752
- US-A1- 2008 111 379

## Description

The present invention relates to a method for measuring the wind direction and to a wind turbine.

The wind vane controlling or measuring the yaw direction of the nacelle and rotor of an up-wind wind turbine is normally positioned on the nacelle behind the rotor. The flow disturbance from the rotor, will impact the reading from the wind vane, and give a biased measurement of the wind direction resulting in a yaw error. The yaw error is the phenomenon where the turbine is not pointing into the wind, resulting in the wind direction is not perpendicular on the rotor plane.

To minimize the problem, the wind vane is normally mounted in the position that is considered to have only minor disturbed inflow.

A more advanced method to measure the wind direction is to have instrumentation in front of the rotor. By doing so, the instrumentation has free inflow, and the wake from rotor disk is avoided. Also pressure sensors mounted on the spinner or a surface in front of the turbine can be used, in order to measure the wind direction. However both types have the disadvantage, that the costs are higher than by using the classical nacelle positioned wind vane. For that reason the nacelle positioned wind vane is still the most used solution.

The wind vane can be of either mechanical or sonic type or for that matter any other types. Generally, a spinner anemometer using pressure sensors mounted on the spinner in the front of the rotor is known from the art. Moreover, classical wind vanes and anemometers mounted on a rod in front of the spinner are known.

In the documents US 2008/0111379 A1, JP 1 284 763 A, EP 2 067 989 A2 and US 4,011,752 different methods measuring the wind speed or the wind direction are described.

It is a first objective of the present invention to provide an improved method for measuring the wind direction in the wake of a wind turbine rotor. It is a second objective of the present invention to provide an advantageous wind turbine.

The first objective is solved by a method for measuring the wind direction as claimed in claim 1. The second objective is solved by a wind turbine as claimed in claim 8. The depending claims define further developments of the present invention.

The inventive method for measuring the wind direction comprises the steps of measuring the wind direction in the wake of a wind turbine rotor, and sorting the obtained wind direction signal using at least one sorting parameter. For example, the wind direction can be measured by a means which is located in the wake of the rotor. The means for measuring the wind direction can preferably be located on a nacelle of the wind turbine. Advantageously, a wind vane may be used as means for measuring the wind direction.

The present invention has the advantage, that the yaw error of a rotor of a wind turbine can be minimized. This can be obtained by improving the measured wind direction signal. The advantage by using the yaw error is improving the electrical production, and minimizing the loads on the construction. Consequently, the economical return is increased and the components costs are reduced.

The wind direction can be measured as a function of a sorting parameter and the measured wind direction can be sorted depending on the sorting parameter. For instance, the wind direction can be measured as a function of the azimuth angle of the rotor. The obtained wind direction signal can then be sorted depending on the azimuth angle of the rotor.

The wind direction signal is sorted depending on a signal which indicates periods, for example time periods, with disturbed air flow. The air flow at the measuring position can be disturbed, for example, by passing wind turbine rotor blades when the rotor is in operation.

The rotor azimuth angle and/or the rotation speed of the rotor and/or a signal of a gravity sensor (G-sensor) and/or a signal of a load sensor can be used as sorting parameter. The gravity sensor and/or the load sensor may be located at a rotor blade. In other words, the rotor azimuth angle and/or the rotation speed of the rotor and/or the signal of a gravity sensor, for example located at a rotor blade, and/or a signal of a load sensor, for example being located on a rotor blade, can be measured for sorting the measured wind direction signal. Moreover, the wind direction signal can be sorted by means of a yaw controller.

Generally, the wind direction signal can instantly and/or continuously be sorted. This has the advantage, that a possible time delay between the measurement and obtaining an improved result can be reduced.

The wind direction signal is sorted by picking out or removing specific wind direction signals depending on the at least one sorting parameter. For example, the wind direction signals at specific rotor azimuth degrees, which may for instance correspond to a rotor blade passing through the air flow towards the measuring position, may be removed. This has the advantage that the signals disturbed by the rotor blades may be removed and only the signals corresponding to an undisturbed air flow can be picked out.

Moreover, the sorted signal can be further optimized using at least one optimizing parameter. This further improves the obtained signal and may reduce the yaw error.

For example, a wind speed signal and/or a power signal and/or a pitch angle signal and/or a signal of a load cell may be used as optimizing parameter. A wind speed signal and/or a power signal and/or a pitch angle signal and/or a signal of a load cell can be measured for optimizing the sorted wind direction signal.

The sorted wind vane signal may be optimized using e.g. a measured wind speed to indicate whether the sorted wind vane signal should be corrected. This could be done in the yaw controller by a look-up table for e.g. addition, subtraction, multiplication and/or division of a specific look-up number in relation to the wind speed (optimizing parameter) and the rotor azimuth signal (sorting parameter) and the wind vane signal. Generally, the sorted signal can be optimized by using a look-up table.

The inventive wind turbine comprises a rotor and a means for measuring the wind direction. The means for measuring the wind direction is located in the wake of the rotor. The wind turbine further comprises at least one means for sorting the measured wind direction signals. This has the advantage, that an improved wind direction signal can be obtained, which only represents the undisturbed air flow direction.

Furthermore, the wind turbine may comprise at least one means for optimizing the sorted signal. This allows for a further improvement of the obtained wind direction signal. Especially by using one or more sensors for measuring at least one optimizing parameter from the turbine, it is possible to have a variable part of the wind direction signal or wind vane signal removed, based on the operational conditions.

The wind turbine may comprise a wind vane as means for measuring the wind direction. Moreover, the wind turbine may comprise a yaw controller which comprises the means for sorting the measuring direction signals and/or the means for optimizing the sorted signal. For example, the means for sorting the measured wind direction signal may comprise a gravity sensor and/or a load sensor. The gravity sensor and/or the load sensor may preferably be located on a wind turbine rotor blade. Moreover, the means for optimizing the sorted signal may comprise a load cell. The load cell may preferably be located on the wind turbine rotor blade.

By means of the present invention the yaw error of a rotor of a wind turbine can be minimized by improving a wind direction signal, for example a wind vane signal, by using one or more sensor signals to sort the wind direction signal (sorting parameter) and/or in combination with one or more optimizing sensor signals (optimizing parameter).

Further features, properties and advantages of the present invention will become clear from the following description of an embodiment in conjunction with the accompanying drawings. The mentioned features are advantageous separate or in any combination with each other.
- Figure 1: schematically shows a wind turbine.
- Figure 2: schematically shows part of a wind turbine in a perspective view.
- Figure 3: schematically shows the wind direction measured by a wind vane as a function of the rotor azimuth angle.

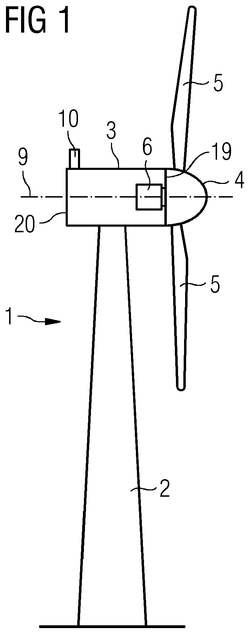

An embodiment of the present invention will now be described with reference to Figures 1 to 3.

Figure 1 schematically shows a wind turbine 1. The wind turbine 1 comprises a tower 2, a nacelle 3 and a rotor or hub 4. The nacelle 3 is located on top of the tower 2. The hub 4 comprises a number of wind turbine blades 5. The rotor or hub 4 is mounted to the nacelle 3. Moreover, the rotor 4 is pivot-mounted such that it is able to rotate about a rotation axis 9. A generator 6 is located inside the nacelle 3. The wind turbine 1 may be a direct drive wind turbine.

The nacelle 3 comprises a near side 19 facing the rotor 4 and a far side 20 opposite to the rotor 4. A wind vane 10 is located on top of the nacelle, preferably close to the far side 20.

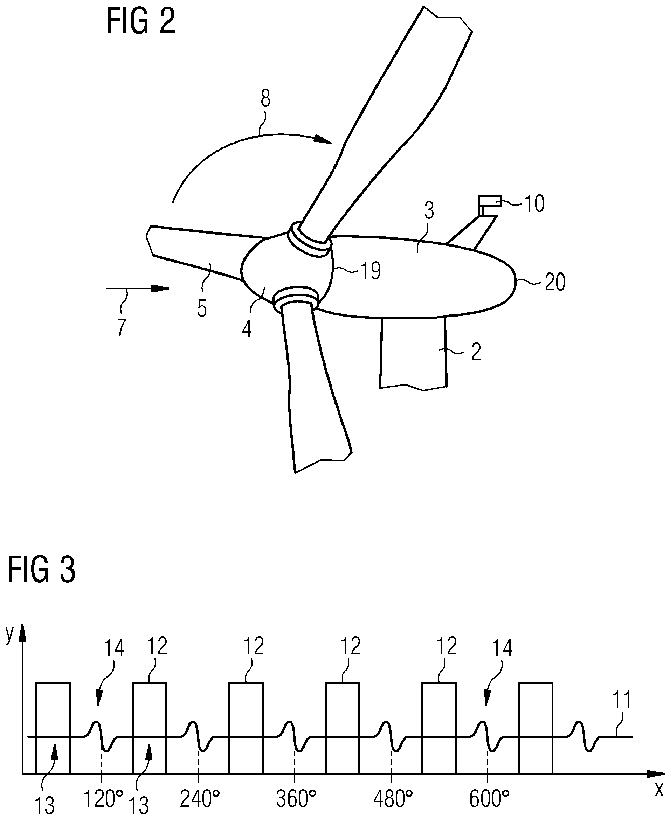

Figure 2 schematically shows part of a wind turbine 1 in a perspective view. The wind direction is indicated by an arrow 7. The rotation direction of the rotor 4 is indicated by an arrow 8. The wind vane 10 which is used for measuring the wind direction, for example for controlling or calculating the yaw angle, is located in the wake of the rotor 4. This means, that the air flow at first passes the rotor 4 before it reaches the wind vane 10. The air flow arriving at the wind vane 10 is typically disturbed by the influence of the rotor blades 5.

Figure 3 schematically shows the wind direction measured by the wind vane 10 as a function of the azimuth angle of the rotor 4. In Figure 3 the x-axis indicates the rotor azimuth angle. The y-axis indicates the measured wind direction. The measured wind direction signals are indicated by reference numeral 11. The measured curve 11 shows portions 12, where the measured wind direction is nearly constant for at least one rotor revolution. These portions 12 represent an undisturbed air flow. This means, that the wind direction which is measured at specific rotor azimuth angle portions represents the wind direction which is also present in the environment of the wind turbine 1. This wind direction is not influenced by the rotor blades 5.

In the present embodiment the three-bladed rotor 4 causes a disturbance by every blade passage at every 120 degrees of rotation. In Figure 3 at the rotor azimuth angles 120°, 240°, 360° and so forth a rotor blade 5 is passing the wind vane 10 and disturbs the air flow towards the wind vane 10. The measured wind direction in the rotor azimuth angle region around these angles corresponding to a blade passing 14 shows a rapidly changing signal. These signals do not correspond to the real wind direction in the environment of the wind turbine and are not capable for further yaw angle calculations or yaw controlling.

The disturbed measurement signals 14 are removed and the undisturbed measurement signals 13 are picked out for further calculations. Since the wind flow measured by the wind vane 10 is disturbed at every blade passage, the rotor azimuth signal (rotor angle) can be used for sorting the instantly and continuously stored time/history wind vane signal. The wind vane signal can instantly and continuously be sorted by picking out or removing specific wind vane signals at specific rotor azimuth degrees, as for example shown in Figure 3. This may be done directly by a program in a yaw controller controlling the yaw angle of the rotor 4 and the nacelle 3 of the wind turbine 1. The sorted wind vane signal may further be optimized using e.g. a measured wind speed to indicate whether the sorted wind vane signal should be corrected. This could be done in the yaw controller by a look-up table for e.g. addition, subtraction, multiplication and/or division of a specific look-up number in relation to the wind speed (optimizing parameter) and the rotor azimuth signal (sorting parameter) and the wind vane signal.

Removing a part of the yaw signal or the wind direction signal can be obtained in various ways. The below table shows different options:

| Primary measured parameter | Sorting parameter | Optimizing parameter |
|---|---|---|
| Wind Direction | Rotor azimuth | Wind Speed |
| | RPM + signal analysis | Power |
| | G-sensor at the rotor | Pitch angle |
| | Load sensor on the blade | Load cell on blade |
| | Other signals that directly or indirectly can be used for removing time periods with disturbed airflow. | Other signals that directly or indirectly can optimize the sorting parameter. |

The wind direction as primary measured parameter can be sorted by a sorting parameter. Generally every signal that directly or indirectly can be used for removing periods with disturbed air flow can be used as sorting parameter. For example, the rotor azimuth angle, the rotation of the rotor per minute and a further signal analysis, a signal of a gravity sensor at the rotor 4 or the signal of a load sensor on the blade 5 can be used as sorting parameter.

Moreover, the primary method and sorted parameter or signal can further be optimized by means of an optimizing parameter. Generally every signal that directly or indirectly can optimize the sorting parameter is capable for being used as optimizing parameter. For example, the wind speed, the power, for instance the power of the rotor or the power of a generator, the pitch angle or a signal of a load cell, for example located on a blade 5, can be used as optimizing parameter. The optimizing parameter can for example be obtained by means of one or more sensors from the turbine. Using an optimizing parameter, for example from an additional sensor, makes it possible to have a variable part of the primary measured wind vane signal or of the sorted wind vane signal removed, for instance based on the operational conditions.

Generally, one or a number of the previously mentioned sorting parameters can be used to sort the primary measured wind direction. Furthermore, one or a number of the mentioned optimizing parameters can be used to further optimize the sorted signal.

The present invention uses the classical setup with the wind vane on the nacelle behind the rotor, however improved by using other sensors. Based on information from other sensors, part of the signal from the wind vane can be removed, and by doing so the wind direction reading can be improved and consequently the yaw error can be minimized. This improved signal from the wind vane can be used as a signal to the yaw control system.

Using the inventive method and/or the inventive wind turbine makes it possible to obtain a sorted and optimized wind direction signal, which corresponds to the real and undisturbed wind direction in the environment of the wind turbine. This improved signal can be used for yaw angle calculations and allows reducing the yaw error. A reduced yaw error improves the electrical production, minimizes the loads on the construction and increases economical return and reduces the components.

## Claims

1. A method for measuring the wind direction (7), comprising the steps of
- measuring the wind direction in the wake of a wind turbine rotor (4), **characterised in**
- sorting the obtained wind direction signal using at least one sorting parameter by removing specific wind direction signals depending on the at least one sorting parameter, wherein a signal which indicates periods with disturbed air flow is used as the sorting parameter.

2. The method as claimed in claim 1,
**characterised in**
using the rotor azimuth angle and/or the rotation speed of the rotor and/or a signal of a gravity sensor and/or a signal of a load sensor as sorting parameter.

3. The method as claimed in any of the claims 1 to 2,
**characterised in**
instantly and/or continuously sorting the wind direction signal.

4. The method as claimed in any of the claims 1 to 3,
**characterised in**
measuring the wind direction (7) as a function of the azimuth angle of the rotor (4) and sorting the measured the wind direction signals depending on the azimuth angle of the rotor.

5. The method as claimed in any of the claims 1 to 4,
**characterised in**
optimising the sorted signal using at least one optimising parameter.

6. The method as claimed in claim 5,
**characterised in**
using a wind speed signal and/or a power signal and/or a pitch angle signal and/or a signal of a load cell as optimising parameter.

7. The method as claimed in claim 5 or claim 6,
**characterised in**
optimising the sorted signal by using a look-up table.

8. A wind turbine (1) comprising a rotor (4) and a means for measuring the wind direction which is located in the wake of the rotor,
**characterised in that**
the wind turbine (1) comprises at least one means configured for sorting the measured wind direction signals using at least one sorting parameter by removing specific wind direction signals depending on the at least one sorting parameter, wherein a signal which indicates periods with disturbed air flow is used as the sorting parameter.

9. The wind turbine (1) as claimed in claim 8,
**characterised in that**
the wind turbine (1) comprises at least one means for optimising the sorted signal.

10. The wind turbine (1) as claimed in claim 8 or claim 9,
**characterised in that**
the wind turbine (1) comprises a wind vane (10) as means for measuring the wind direction (7).

11. The wind turbine (1) as claimed in any of the claims 8 to 10,
**characterised in that**
the wind turbine (1) comprises a yaw controller which comprises the means for sorting the measured wind direction signals and/or the means for optimising the sorted signal.

12. The wind turbine (1) as claimed in any of the claims 8 to 11,
**characterised in that**
the means for sorting the measured wind direction signals comprises a gravity sensor and/or a load sensor.

13. The wind turbine (1) as claimed in any of the claims 8 to 12,
**characterised in that**
the means for optimising the sorted signal comprises a load cell.

## Patentansprüche

1. Verfahren zur Messung der Windrichtung (7),
umfassend die folgenden Schritte:
- Messen der Windrichtung im Sog des Rotors (4) einer Windkraftanlage, **gekennzeichnet durch**
- Sortieren des erlangten Windrichtungssignals unter Verwendung von mindestens einem Sortierparameter durch Entfernen spezifischer Windrichtungssignale abhängig von dem mindestens einen Sortierparameter, wobei ein Signal, das Perioden mit gestörtem Luftstrom angibt, als der Sortierparameter verwendet wird.

2. Verfahren nach Anspruch 1,
**gekennzeichnet durch**
Verwenden des Rotorazimutwinkels und/oder der Drehgeschwindigkeit des Rotors und/oder eines Signals eines Schwerkraftsensor und/oder eines Signals eines Lastsensors als Sortierparameter.

3. Verfahren nach einem der Ansprüche 1 bis 2,
**gekennzeichnet durch**
momentanes und/oder kontinuierliches Sortieren des Windrichtungssignals.

4. Verfahren nach einem der Ansprüche 1 bis 3,
**gekennzeichnet durch**
Messen der Windrichtung (7) als eine Funktion des Azimutwinkels des Rotors (4) und Sortieren der gemessenen Windrichtungssignale in Abhängigkeit von dem Azimutwinkel des Rotors.

5. Verfahren nach einem der Ansprüche 1 bis 4,
**gekennzeichnet durch**
Optimieren des sortierten Signals unter Verwendung von mindestens einem Optimierungsparameter.

6. Verfahren nach Anspruch 5,
**gekennzeichnet durch**
Verwenden eines Windgeschwindigkeitssignals und/oder eines Leistungssignals und/oder eines Anstellwinkelsignals und/oder eines Signals von einer Kraftmessdose als Optimierungsparameter.

7. Verfahren nach Anspruch 5 oder Anspruch 6,
**gekennzeichnet durch**
Optimieren des sortierten Signals unter Verwendung einer Nachschlagtabelle.

8. Windkraftanlage (1) umfassend einen Rotor (4) und ein Mittel zum Messen der Windrichtung, das sich im Sog des Rotors befindet,
**dadurch gekennzeichnet, dass**
die Windkraftanlage (1) mindestens ein Mittel umfasst, das dafür eingerichtet ist, die gemessenen Windrichtungssignals unter Verwendung von mindestens einem Sortierparameter zu sortieren, indem spezifische Windrichtungssignale abhängig von dem mindestens einen Sortierparameter entfernt werden, wobei ein Signal, das Perioden mit gestörtem Luftstrom angibt, als der Sortierparameter verwendet wird.

9. Windkraftanlage (1) nach Anspruch 8,
**dadurch gekennzeichnet, dass**
die Windkraftanlage (1) mindestens ein Mittel zum Optimieren des sortierten Signals umfasst.

10. Windkraftanlage (1) nach Anspruch 8 oder Anspruch 9,
**dadurch gekennzeichnet, dass**
die Windkraftanlage (1) eine Windfahne (10) als Mittel zur Messung der Windrichtung (7) umfasst.

11. Windkraftanlage (1) nach einem der Ansprüche 8 bis 10,
**dadurch gekennzeichnet, dass**
die Windkraftanlage (1) eine Giersteuereinrichtung umfasst, die das Mittel zum Sortieren der gemessenen Windrichtungssignale und/oder das Mittel zum Optimieren des sortierten Signals umfasst.

12. Windkraftanlage (1) nach einem der Ansprüche 8 bis 11,
**dadurch gekennzeichnet, dass**
das Mittel zum Sortieren der gemessenen Windrichtungssignale einen Schwerkraftsensor und/oder einen Lastsensor umfasst.

13. Windkraftanlage (1) nach einem der Ansprüche 8 bis 12,
**dadurch gekennzeichnet, dass**
das Mittel zum Optimieren des sortierten Signals eine Kraftmessdose umfasst.

## Revendications

1. Procédé de mesure de la direction du vent (7), comprenant
- une mesure de la direction du vent dans le sillage d'un rotor d'éolienne (4), **caractérisé par**
- un classement du signal de direction du vent obtenu à l'aide d'au moins un paramètre de classement grâce à une élimination de signaux de direction du vent spécifiques en fonction du au moins un paramètre de classement, dans lequel un signal qui indique des périodes de circulation d'air perturbée est utilisé en tant que paramètre de classement.

2. Procédé selon la revendication 1, **caractérisé par**
une utilisation de l'angle d'azimut de rotor et/ou de la vitesse de rotation du rotor et/ou d'un signal d'un capteur de gravité et/ou d'un signal d'un capteur de charge en tant que paramètre de classement.

3. Procédé selon la revendication 1 ou 2, **caractérisé par**
un tri instantané et/ou continu du signal de direction du vent.

4. Procédé selon l'une quelconque des revendications 1 à 3, **caractérisé par**
une mesure de la direction du vent (7) en tant que fonction de l'angle d'azimut du rotor (4) et un classement des signaux de direction du vent mesurés en fonction de l'angle d'azimut du rotor.

5. Procédé selon l'une quelconque des revendications 1 à 4, **caractérisé par**
une optimisation du signal classé à l'aide d'au moins un paramètre d'optimisation.

6. Procédé selon la revendication 5, **caractérisé par**
une utilisation d'un signal de vitesse du vent et/ou d'un signal de puissance et/ou d'un signal d'angle de pas et/ou d'un signal d'un dynamomètre piézoélectrique en tant que paramètre d'optimisation.

7. Procédé selon la revendication 5 ou 6, **caractérisé par**
une optimisation du signal classé à l'aide d'une table de consultation.

8. Eolienne (1) comprenant un rotor (4) et un moyen permettant de mesurer la direction du vent qui se situe dans le sillage du rotor,
**caractérisée en ce que**
l'éolienne (1) comprend au moins un moyen configuré pour classer les signaux de direction du vent mesurés à l'aide d'au moins un paramètre de classement grâce à une élimination de signaux de direction du vent spécifiques en fonction du au moins un paramètre de classement, dans lequel un signal qui indique des périodes de circulation d'air perturbée est utilisé en tant que paramètre de classement.

9. Eolienne (1) selon la revendication 8, **caractérisée en ce que**
l'éolienne (1) comprend au moins un moyen permettant d'optimiser le signal classé.

10. Eolienne (1) selon la revendication 8 ou 9, **caractérisée en ce que**
l'éolienne (1) comprend une girouette (10) en tant que moyen permettant de mesurer la direction du vent (7).

11. Eolienne (1) selon l'une quelconque des revendications 8 à 10, **caractérisée en ce que**
l'éolienne (1) comprend un dispositif de commande de lacet qui comprend le moyen permettant de classer les signaux de direction du vent mesurés et/ou le moyen permettant d'optimiser le signal classé.

12. Eolienne (1) selon l'une quelconque des revendications 8 à 11, **caractérisée en ce que**
le moyen permettant de classer les signaux de direction du vent mesurés comprend un capteur de gravité et/ou un capteur de charge.

13. Eolienne (1) selon l'une quelconque des revendications 8 à 12, **caractérisée en ce que**
le moyen permettant d'optimiser le signal classé comprend un dynamomètre piézoélectrique.
